# FASCICULE DE BREVET EUROPEEN

(11) **EP 0 522 941 B1**
(45) Date de publication et mention de la délivrance du brevet: **13.09.1995**
(21) Numéro de dépôt: 92401919.3
(22) Date de dépôt: 03.07.1992
(51) Int. Cl.: G01P 3/46, G01D 5/20

(54) **Dispositif pour la mesure de la position angulaire d'un rotor par rapport à un stator**
Einrichtung zur Messung der Winkellage eines Rotors in bezüglich eines Stators
Device for measuring the angular position of a rotor with respect to a stator

(30) Priorité: 11.07.1991 FR 9108735
(43) Date de publication de la demande: 13.01.1993
(73) Titulaire: GEC ALSTHOM SA, 75116 Paris (FR)
(72) Inventeur: Maestre, Jean-François, F-21000 Dijon (FR)
(74) Mandataire: Fournier, Michel

(56) Documents cités:
- EP-A- 0 210 927
- DE-A- 3 141 015
- FR-A- 2 637 683
- PATENT ABSTRACTS OF JAPAN vol. 006, no. 171 (P-140), 4 Septembre 1982 & JP-A-57088317

## Description

La présente invention est relative à un dispositif de mesure de la position angulaire d'un rotor par rapport à un stator.

L'invention trouve une application particulièrement intéressante, mais non exclusive, dans le domaine de la commande des moteurs électriques.

La Demanderesse a décrit, dans le brevet français FR-A-2 637 683, un dispositif pour la mesure de l'angle de rotation d'un rotor de moteur par rapport à son stator, comprenant 2n capteurs magnétiques disposés selon une circonférence fixe par rapport au stator, n étant le nombre de phases du moteur, chaque capteur comprenant un circuit magnétique muni d'une bobine émettrice et d'une bobine réceptrice, les capteurs étant groupés deux par deux, les capteurs d'un même groupe étant décalés de 180 degrés électriques, les groupes étant régulièrement décalés les uns par rapport aux autres d'un angle géométrique égal à k.360/2p , où k est un nombre arbitraire et p le nombre de paires de pôles du moteur, les bobines émettrices étant toutes reliées en série et alimentées par une tension alternative comprise entre 2 et 15 kHz, les bobines réceptrices d'un même groupe de capteurs étant connectées en série, l'enveloppe des signaux aux bornes de ces ensembles de bobines réceptrices représentant, à un déphasage près, l'image de la mesure de l'angle de rotation dudit rotor.

Un mode de réalisation du capteur précité a été décrit en détail dans le certificat d'addition français FR-A-2 650 666.

Un tel capteur fonctionne bien mais il est de réalisation relativement onéreuse, en particulier pour les capteurs utilisés pour les moteurs à faible nombre de pôles (au-dessous de six pôles par exemple).

Le document DE-31 41 015 décrit un capteur pour la mesure de la position angulaire d'un rotor par rapport à un stator, ledit rotor comprenant un seul lobe.

Un but de la présente invention est de réaliser un capteur de prix de revient abaissé, en particulier pour les capteurs à faible nombre de paires de pôles, tout en conservant la même précision et la même sûreté de fonctionnement.

L'invention a pour objet un capteur pour la mesure de la position angulaire d'un rotor par rapport à un stator, caractérisé en ce qu'il comprend 2p lobes, p étant un nombre entier, et, autour du rotor, un stator en matériau magnétique comprenant des dents en nombre égal à un multiple de 2n.p, n étant le nombre de phases du capteur, chaque dent étant entourée par une première bobine dite excitatrice et par une seconde bobine dite réceptrice, les bobines excitatrices étant reliées en série phase par phase et disposées sur les dents de manière que les flux magnétiques produits par ces bobines dans deux dents adjacentes soient dirigés dans des sens opposés, l'ensemble desdites bobines excitatrices étant alimentées par une tension ou un courant alternatifs, les paires de bobines réceptrices relatives à une même phase et décalées de 180 degrés électriques étant mises en série, l'enveloppe du signal aux bornes de chacune de ces paires de bobines réceptrices représentant à un facteur d'échelle près l'angle de rotation dudit rotor par rapport audit stator.

Avantageusement, les diverses paires de bobines réceptrices relatives à une même phase sont toutes mises en série.

L'invention sera bien comprise par la desciption donnée ci-après d'un exemple de réalisation de l'invention, en référence au dessin annexé dans lequel :
- la figure 1 est un schéma de principe du capteur de l'invention,
- la figure 2 est une schéma montrant les connexions des bobines du stator du capteur,
- la figure 3 est un diagramme montrant la forme du signal aux bornes d'une bobine réceptrice,
- la figure 4 est un diagramme montrant la forme du signal recueilli aux bornes du circuit constitué par deux bobines réceptrices décalées de 180 degrés électriques,
- les figures 5 à 7 illustrent la technologie de réalisation du stator.

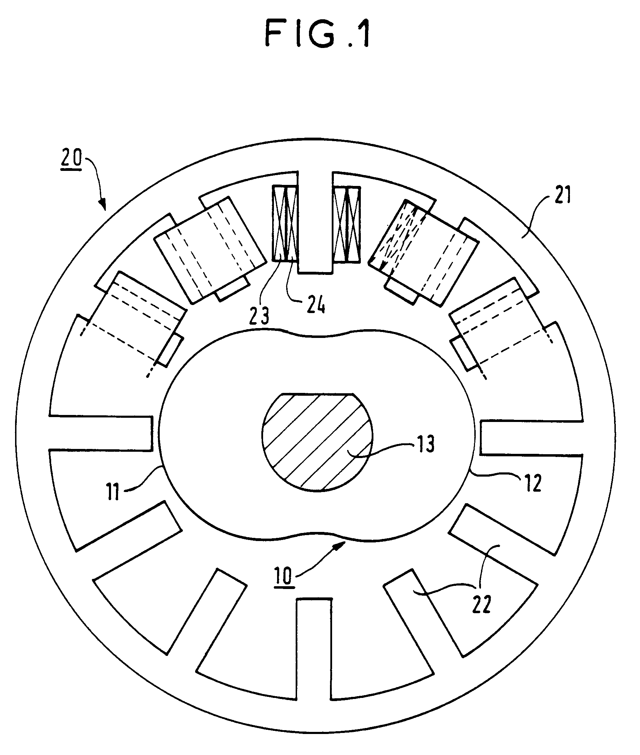

La figure 1 illustre la principe du capteur de l'invention. L'exemple choisi est celui d'un capteur à 4 pôles (p = 2).

Le capteur de l'invention comprend un rotor 10 et un stator 20.

Le rotor 10 comporte deux lobes 11 et 12, soit un lobe par paire de pôles. Le rotor est constitué d'un empilage de tôles magnétiques, et la forme donnée aux tôles est choisi pour que le flux dans l'entrefer ait une forme s'approchant aussi près que possible d'une sinusoïde.

Le rotor comprend avantageusement une ouverture centrale 13 pour lui permette d'être calé sur l'arbre d'un moteur à piloter.

Le stator, également formé d'un empilage de tôles magnétiques, comprend une couronne 21 et une pluralité de dents 22, de section rectangulaire, dirigées vers l'intérieur. Dans l'exemple décrit, les dents sont au nombre de 8; plus généralement, le nombre de dents est un multiple du produit 2n.p, n étant le nombre de phases du capteur, p étant le nombre de paires de pôles du capteur.

Chaque dent possède deux bobines telles que 23 et 24, disposées de préférence de manière coaxiale.

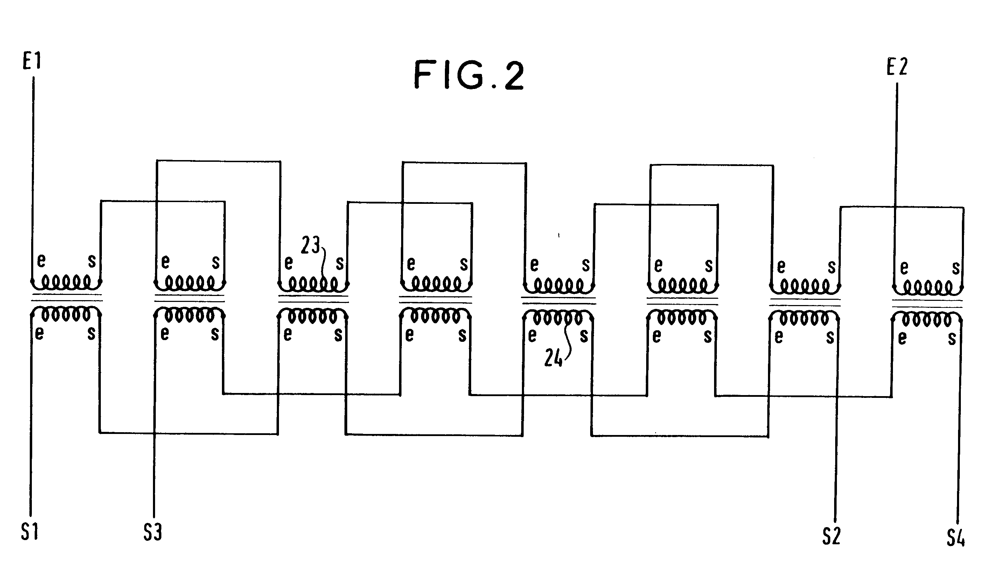

Les bobines 23, appelées bobines émettrices, sont toutes reliées en série, l'ensemble étant connecté à une source E1E2 de tension ou de courant alternatifs, de fréquence comprise de préférence entre 1 et 10 kHz (figure 2). L'entrée e de la bobine émettrice d'une dent donnée est reliée à l'entrée e de la bobine émettrice d'une dent adjacente, de sorte que les flux émis par les bobines émettrices de ces deux dents soient de sens opposés. La sortie s d'une bobine émettrice est relié à la sortie s de la bobine émettrice de la dent voisine.

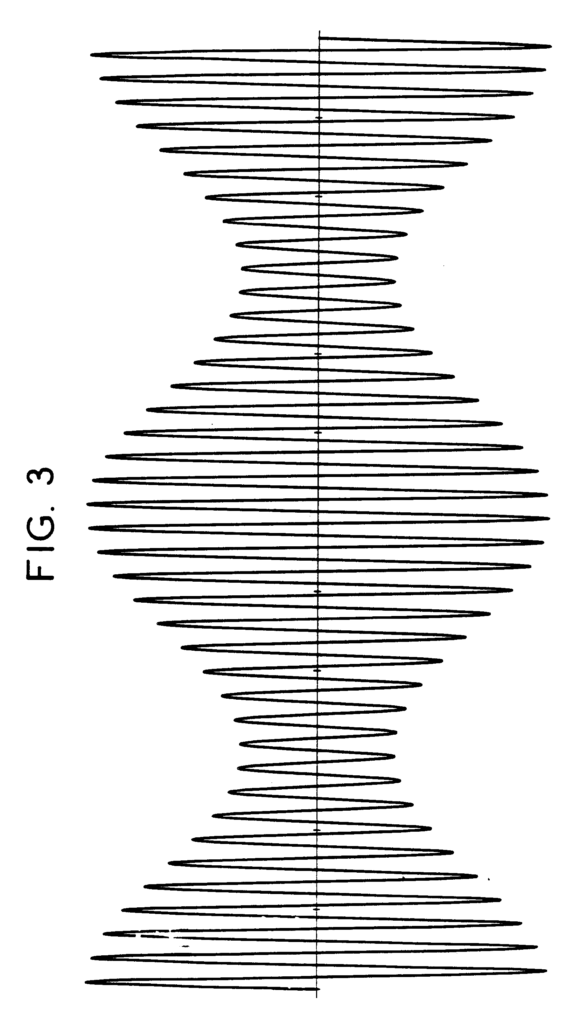

La figure 3 montre la tension aux bornes d'une bobine réceptrice 24.

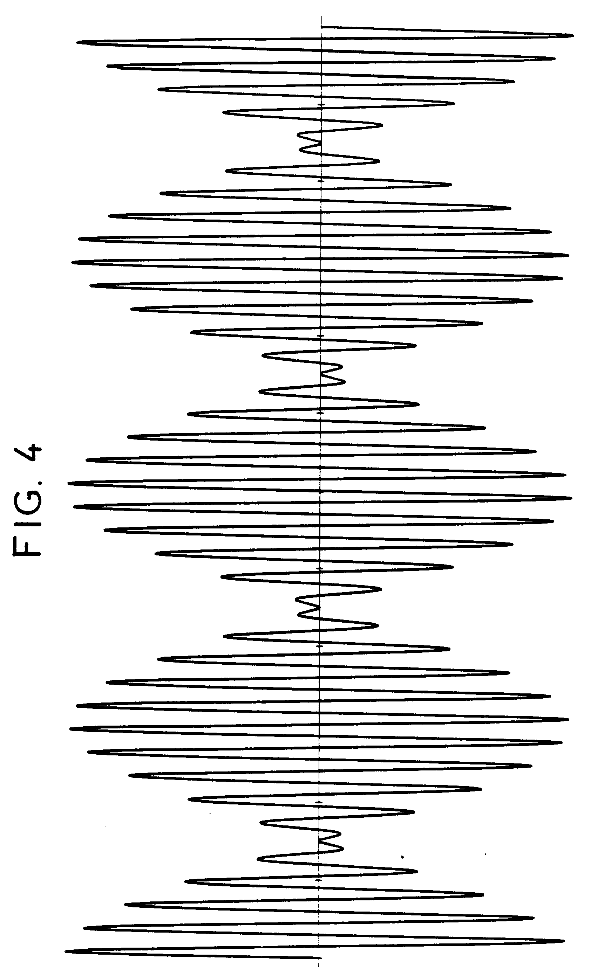

En mettant en série deux bobines réceptrices décalées d'un angle électrique de 180 degrés, on obtient le signal représenté dans la figure 4, qui est débarrassé de la composante continue et des harmoniques pairs. L'enveloppe de ce signal représente, à un facteur d'échelle près, l'angle de rotation du rotor par rapport au stator à partir d'une origine arbitraire.

Dans l'exemple de la figure 2, on a mis en série toutes les bobines décalées de 180 degrés électriques, ce qui permet de recueillir deux signaux entre les bornes S1 et S2 d'une part, et S3 et S4 d'autre part, ces signaux étant déphasés de 90 degrés électriques. On obtient par ce capteur l'équivalent d'un résolver multipolaire diphasé.

En mettant 12 dents au stator, on obtiendrait un capteur équivalent à un résolver multipolaire triphasé.

Le capteur de l'invention permet de piloter un moteur sans électronique placée sur le moteur lui-même.

Le pilotage actuel d'un moteur dit "trapèze" nécessite la présence sur le moteur de capteurs à effet Hall pour mesurer la position du rotor par rapport au stator; il est en outre indispensable de disposer d'un tachymètre pour connaître la vitesse du moteur et pouvoir la faire varier.

L'utilisation du capteur de l'invention permet de piloter le moteur sans électronique embarquée sur le moteur. Il est possible de réaliser les signaux de commande nécessaires au pilotage à partir des signaux du capteur, au moyen d'un circuit électronique qui pourra être placé loin du moteur et par conséquent loin des perturbations dues aux vibrations et aux échauffements.

Pour le pilotage des moteurs dits "sinus", actuellement pilotés par des résolvers qui fournissent position du rotor par rapport au stator et vitesse du moteur, le capteur de l'invention est utilisable directement, si le nombre de ses pôles est égale à celui des pôles du moteur, et donc sans nécessiter de circuit d'adaptation à la polarité, comme c'est le cas avec un résolver.

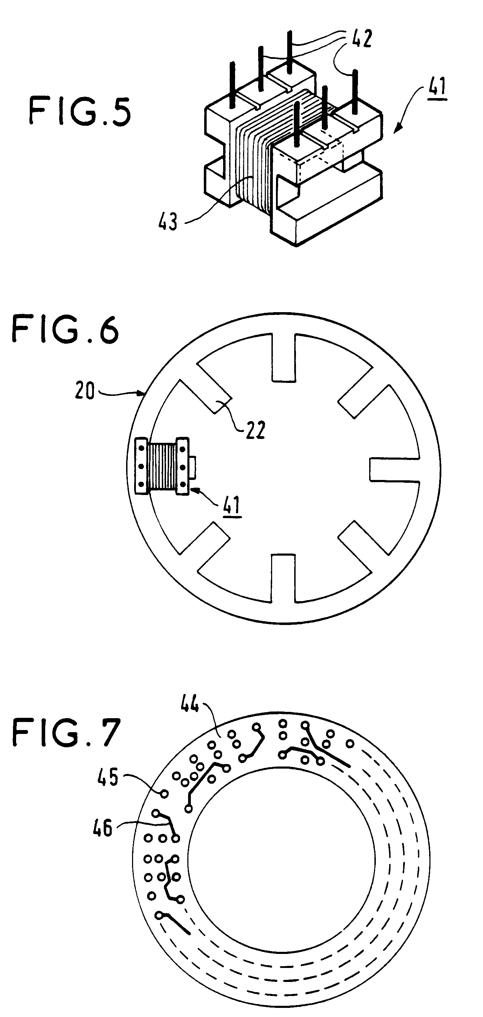

Les figures 5 à 7 montrent divers éléments pour la réalisation pratique du stator du capteur.

La bobine statorique est réalisée à partir d'un mandrin en plastique 41, muni de broches de connexion et de fixation 42.

Après enroulement du fil et soudure des connexions aux broches (figure 5), les bobines sont enfilés sur les dents du circuit magnétique (figure 6).

L'ensemble est embroché sur une plaque de circuit imprimé 44 en forme de couronne, comprenant des trous 45 pour l'enfichage des extrémités de broche, certains de ces trous étant réunis par des dépôts conducteurs 46 réalisant les connexions électriques nécessaires (fig. 7).

Cette technologie permet un montage très rapide du stator du capteur qui est par conséquent d'un prix de revient acceptable.

L'invention s'applique à la réalisation de capteurs de pilotage pour toutes dimensions de moteur, en particulier pour les petits moteurs.

En outre le capteur peut être utilisé dans un moteur à rotor noyé dans un liquide hydraulique, le rotor du capteur étant noyé avec le rotor du moteur.

## Revendications

1. Capteur pour la mesure de la position angulaire d'un rotor (10) par rapport à un stator (20), ledit rotor comprenant des lobes et ledit stator comprenant des dents, où:
- lesdits lobes (11, 12) du rotor (10) sont au nombre de 2p, p étant un nombre entier, et sont disposés dans un plan radial audit rotor,
- lesdites dents (22) du stator (20) sont en nombre égal à un multiple de 2n.p, n étant le nombre de phase du capteur, et sont disposées dans ledit plan radial audit rotor et possèdent chacune deux bobines (23, 24), respectivement excitatrice et réceptrice, d'axes longitudinaux également dans ledit plan radial audit rotor,
- lesdites bobines excitatrices étant reliées en série phase par phase et disposées sur les dents de manière que les flux magnétiques produits par ces bobines dans deux dents adjacentes soient dirigés dans des sens opposés, l'ensemble desdites bobines excitatrices étant susceptibles d'être alimentées par une tension ou un courant alternatif,
- lesdites paires de bobines réceptrices (24) relatives à une même phase et décalées de 180 degrés électriques étant mise en série, et
- l'enveloppe du signal aux bornes de chacune desdites paires de bobines réceptrices représentant à un facteur d'échelle près l'angle de rotation dudit rotor par rapport audit stator.

2. Capteur selon la revendication 1, dans lequel les diverses paires de bobines réceptrices (24) relatives à une même phase sont toutes mise en série.

3. Capteur selon l'une des revendications 1 ou 2, dans lequel, sur chaque dent, les bobines émettrice (23) et réceptrice (24) sont disposées de manière coaxiale.

4. Capteur selon l'une des revendications 1 à 3, dans lequel chacune des bobines émettrice (23) et réceptrice (24) est bobinée sur un mandrin (41) muni de broches (42) et qu'après enfilage de toutes les bobines sur les dents (22) du circuit magnétique statorique, les branches sont positionnées et soudées dans les trous (45) d'un circuit imprimé (44) muni de liaisons (45) de connexion.

5. Capteur selon la revendication 4, dans lequel la fréquence d'alimentation des bobines excitatrices est comprise entre 1 et 20 kHz.

## Patentansprüche

1. Sonde zur Messung der Winkellage eines Rotors (10) in Bezug auf einen Stator (20), wobei der Rotor Keulen und der Stator Zähne aufweist, wobei
- der Rotor (10) 2p Keulen (11, 12) besitzt, wobei p eine ganze Zahl ist, die in einer zum Rotor radialen Ebene angeordnet sind,
- die Zähne (22) des Stators (20) in einer Anzahl gleich einem Vielfachen von 2n·p vorliegen, wobei n die Anzahl der Phasen der Sonde ist, und in der zum Rotor radialen Ebene angeordnet sind und je zwei Spulen (23, 24) tragen, nämlich eine Erregungsspule und eine Empfangsspule, deren Längsachsen ebenfalls in der zum Rotor radialen Achse liegen,
- wobei die Erregungsspulen in Reihe Phase für Phase verbunden und derart auf den Zähnen angeordnet sind, daß die von diesen Spulen in zwei benachbarten Zähnen erzeugten Magnetflüsse in entgegengesetzte Richtungen verlaufen, und wobei die Gesamtheit der Erregungsspulen von einer Wechselspannung oder einem Wechselstrom gespeist werden kann,
- wobei die die gleiche Phase betreffenden und um 180 elektrische Grad verschobenen Paare von Empfangsspulen (24) in Reihe angeordnet sind, und
- wobei die Umhüllende des an den Klemmen jedes dieser Paare von Empfangsspulen erhaltenen Signals bis auf einen Maßstabsfaktor den Drehwinkel des Rotors in Bezug auf den Stator darstellt.

2. Sonde nach Anspruch 1, bei der die sich auf die gleiche Phase beziehenden verschiedenen Paare von Empfangsspulen (24) alle in Reihe liegen.

3. Sonde nach einem der Ansprüche 1 oder 2, bei der auf jedem Zahn die Sendespule (23) und die Empfangsspule (24) koaxial angeordnet sind.

4. Sonde nach einem der Ansprüche 1 bis 3, bei der die Sendespulen (23) und die Empfangsspulen (24) auf einen mit Stiften (42) versehenen Wickeldorn (41) gewickelt sind und nach dem Aufsetzen aller Spulen auf die Zähne (22) des Stator-Magnetkreises die Spulenenden positioniert und in die Löcher (45) eines Druckschaltungskreises (44) eingeschweißt werden, der mit Leiterbahnen (46) versehen ist.

5. Sonde nach Anspruch 4, bei der die Speisefrequenz der Erregungsspulen zwischen 1 und 20 kHz liegt.

## Claims

1. A sensor for measuring the angular position of a rotor (10) relative to a stator (20), with said rotor comprising lobes and said stator comprising teeth, where:
the number of said lobes (11, 12) of the rotor (10) is 2p, where p is an integer, which lobes are disposed in a plane radial to said rotor;
the number of said teeth (22) of the stator (20) is a multiple of 2n.p, where n is the number of phases of the sensor, said teeth being disposed in said plane radial to said rotor and each possessing two windings (23, 24), respectively an "excitation" winding and a "reception" winding, said windings also having longitudinal axes in said plane radial to said rotor;
said excitation windings being connected together in series phase by phase and disposed on the teeth such that the windings on two adjacent teeth produce magnetic flux in opposite directions, the entire set of said excitation windings suitable for being powered by an alternating current or voltage;
said pairs of reception windings (24) relative to the same phase and offset by 180 electrical degrees being connected together in series; and
the envelope of the signal at the terminals of each of said pairs of reception windings representing the angle of rotation of said rotor relative to said stator to within a scaling factor.

2. A sensor according to claim 1, in which the various pairs of reception windings (24) relating to the same phase are all connected together in series.

3. A sensor according to claim 1 or 2, in which the transmission winding (23) and the reception winding (24) on each tooth are disposed coaxially.

4. A sensor according to any one of claims 1 to 3, in which each transmission winding (23) and each reception winding (24) is wound on a former (41) equipped with pins (42), and in that after all the windings have been threaded over the teeth (22) in the stator magnetic circuit, the pins are positioned and soldered in the holes (45) of a printed circuit (44) equipped with connection links (45).

5. A sensor according to claim 4, in which the excitation windings are powered at a frequency lying in the range 1 kHz to 20 kHz.
